# EUROPÄISCHE PATENTANMELDUNG

(11) **EP 4 468 472 A1**
(43) Veröffentlichungstag der Anmeldung: **27.11.2024**
(21) Anmeldenummer: 23181702.4
(22) Anmeldetag: 27.06.2023
(51) Int. Cl.: H01M 50/152, H01M 50/167, H01M 50/184, H01M 50/186

(54) **DICHTUNG, DECKELBAUGRUPPE, ENERGIESPEICHERZELLE UND VERBUND AUS ENERGIESPEICHERZELLEN**

(30) Priorität: 24.05.2023 DE 102023113673
(71) Anmelder: VARTA Microbattery GmbH, 73479 Ellwangen Jagst (DE)
(72) Erfinder: Frank, Waldemar, 73479 Ellwangen (DE); Geiger, Michael, 73479 Ellwangen (DE); Kieninger, Dominik, 73492 Rainau (DE)
(74) Vertreter: Ostertag & Partner Patentanwälte mbB

(57) **Zusammenfassung**

Eine ringförmige Dichtung (103) umfasst ein äußeres Ringsegment (130), das an einem seiner zwei Enden in einem nach innen weisenden Kragen (131) mündet, der das äußere Ringsegment (130) an diesem Ende verengt. Der Kragen (131) weist einen inneren Rand (131a) auf, der in ein inneres Ringsegment (132) übergeht. Dabei weist das äußere Ringsegment (130) eine nach innen weisende, umlaufende, mit einem Hinterschnitt (132) versehene Nase (133) auf. Beschrieben wird eine mit der Dichtung versehene Deckelbaugruppe (102) einer Energiespeicherzelle (100) und die Energiespeicherzelle (100). Weiterhin wird ein Verbund aus solchen Energiespeicherzellen sowie ein Verfahren zur Herstellung eines solchen Verbundes vorgeschlagen.

## Beschreibung

### ANWENDUNGSGEBIET UND STAND DER TECHNIK

Die nachstehend beschriebene Erfindung betrifft eine Dichtung, eine damit versehene Deckelbaugruppe, eine Energiespeicherzelle und ein Verbund aus Energiespeicherzellen.

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle. Sie umfasst eine positive und eine negative Elektrode, zwischen denen ein Separator angeordnet ist. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht. Der Separator verhindert somit einen unmittelbaren Kontakt der Elektroden. Gleichzeitig ermöglicht er aber einen elektrischen Ladungsausgleich zwischen den Elektroden.

Wenn die Entladung reversibel ist, also die Möglichkeit besteht, die bei der Entladung erfolgte Umwandlung von chemischer Energie in elektrische Energie wieder umzukehren und die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden als Energiespeicherelemente heute sekundäre Lithium-Ionen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein.

Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen meist Lösungen von Lithiumsalzen wie Lithiumhexafluorophosphat (LiPF₆) in organischen Lösungsmitteln (z. B. Ether und Ester der Kohlensäure).

Die Kompositelektroden werden im Allgemeinen bei der Herstellung einer Lithium-Ionen-Zelle mit einem oder mehreren Separatoren zu einem Elektroden-Separator-Verbund kombiniert. Hierbei werden die Elektroden und Separatoren oft, allerdings keinesfalls zwingend, unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen wird der Elektroden-Separator-Verbund in Form eines Wickels gebildet oder zu einem Wickel verarbeitet. Im ersten Fall werden beispielsweise eine bandförmige positive Elektrode und eine bandförmige negative Elektrode sowie mindestens ein bandförmiger Separator separat einer Wickelmaschine zugeführt und in dieser zu einem Wickel mit der Sequenz positive Elektrode / Separator / negative Elektrode spiralförmig aufgewickelt. Im zweiten Fall werden eine bandförmige positive Elektrode und eine bandförmige negative Elektrode sowie mindestens ein bandförmiger Separator zunächst zu einem Elektroden-Separator-Verbund kombiniert, beispielsweise unter Anwendung des erwähnten Drucks. In einem weiteren Schritt wird dann der Verbund aufgewickelt.

Für Anwendungen im Automobilbereich, für E-Bikes oder auch für andere Anwendungen mit hohem Energiebedarf, wie z.B. in elektrischen Werkzeugen, werden Lithium-Ionen-Zellen mit möglichst hoher Energiedichte benötigt, die gleichzeitig in der Lage sind, mit hohen Strömen beim Laden und Entladen belastet zu werden.

Häufig sind Zellen für die genannten Anwendungen als zylindrische Rundzellen ausgebildet, beispielsweise mit dem Formfaktor 21 × 70 (Durchmesser mal Höhe in mm). Zellen dieser Art umfassen stets einen Verbundkörper in Form eines Wickels. Moderne Lithium-Ionen-Zellen dieses Formfaktors können eine Energiedichte von bis zu 270 Wh/kg erreichen.

In der WO 2017/215900 A1 sind zylindrische Rundzellen beschrieben, bei denen der Elektroden-Separator-Verbund sowie dessen Elektroden bandförmig ausgebildet sind und in Form eines Wickels vorliegen. Die Elektroden weisen jeweils mit Elektrodenmaterial beladene Stromkollektoren auf. Entgegengesetzt gepolte Elektroden sind innerhalb des Elektroden-Separator-Verbunds versetzt zueinander angeordnet, so dass Längsränder der Stromkollektoren der positiven Elektroden an einer Seite und Längsränder der Stromkollektoren der negativen Elektroden an einer weiteren Seite aus dem Wickel austreten. Zur elektrischen Kontaktierung der Stromkollektoren weist die Zelle ein Kontaktblechteil auf, das auf einer Stirnseite des Wickels aufsitzt und mit einem Längsrand eines der Stromkollektoren durch Verschweißung verbunden ist. Dadurch ist es möglich, den Stromkollektor und damit auch die dazugehörige Elektrode über seine / ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen und auch Wärme kann besser aus dem Wickel abgeführt werden.

Zylindrische Rundzellen wie die in der WO 2017/215900 A1 werden meist als Teil eines Zellverbunds eingesetzt, in dem mehrere Zellen seriell und/oder parallel miteinander verschaltet sind. Häufig ist es gewünscht, die Zellen zum Abgreifen einer elektrischen Spannung nur an einer ihrer Stirnseiten kontaktieren zu müssen. Es ist entsprechend vorteilhaft, an einer der Stirnseiten sowohl einen mit der positiven Elektrode der Zelle verbundenen Anschlusspol als auch einen mit der negativen Elektrode der Zelle verbundenen Anschlusspol vorzusehen.

Das Gehäuse zylindrischer Rundzellen umfasst in der Regel einen Gehäusebecher, der zur Aufnahme des gewickelten Elektroden-Separator-Verbunds dient, sowie eine Deckelbaugruppe, die die Öffnung des Gehäusebechers verschließt. Zwischen der Deckelbaugruppe und dem Gehäusebecher ist eine Dichtung angeordnet, die zum einen der Abdichtung des Zellgehäuses dient, zum anderen aber auch die Funktion hat, die Deckelbaugruppe und den Gehäusebecher elektrisch voneinander zu isolieren. Die Dichtung wird zur Montage meist auf den Rand der Deckelbaugruppe aufgezogen. Zum Verschluss der Rundzellen ist in aller Regel der Öffnungsrand des Gehäusebechers radial nach innen über den von der Dichtung umschlossenen Rand der Deckelbaugruppe umgebogen (Bördelprozess), so dass die Deckelbaugruppe einschließlich der Dichtung in der Öffnung des Gehäusebechers formschlüssig fixiert ist.

Ein Beispiel für eine solche Rundzelle ist in Fig. 3 der EP 3188280 A1 dargestellt. Es ist relativ problemlos möglich, zwecks Integration der dargestellten Zelle in einen Zellverbund die Deckelbaugruppe (Bezugszeichen 270) mit einer geeigneten Stromleiterschiene zu verschweißen, die herausstehende Polkappe (Bezugszeichen 217) bietet hierfür beste Voraussetzungen. Schwieriger ist jedoch die elektrische Anbindung des Gehäusebechers. Möchte man diesen an der gleichen Stirnseite kontaktieren, auf der sich die Deckelbaugruppe befindet, lässt sich die Stromleiterschiene nur auf den radial nach innen umgebogenen Öffnungsrand (Bezugszeichen 213) des Gehäusebechers schweißen. Das Problem dabei ist, dass es hierbei leicht zu Beschädigungen der Dichtung kommen kann, die in unmittelbarem Kontakt mit dem umgebogenen Öffnungsrand steht, da diese thermischen Belastungen gegenüber, wie sie beim Schweißen typischerweise auftreten, empfindlich ist. Rundzellen mit einem klassischen Zellgehäuse wie dem in der EP 3188280 A1 beschriebenen sind daher für eine Anschweißung eines Stromleiters an den Öffnungsrand nicht zugänglich.

Aus der noch unveröffentlichten PCT-Anmeldung PCT/EP2022/083072 der Anmelderin ist eine Energiespeicherzelle bekannt, die ein Gehäuse aufweist, bei dem ein radial nach innen umgebogener Öffnungsrand eines Gehäusebechers eine erhöhte Wandstärke aufweist. Durch diese Maßnahme wird gewährleistet, dass sich Stromleiterschienen auf den radial nach innen umgebogenen Öffnungsrand des Gehäusebechers aufschweißen lassen, ohne dass Folgeprobleme bei der Dichtung auftreten. Die erhöhte Dicke des Öffnungsrandes gewährleistet, dass sich die beim Schweißen generierte Wärme besser verteilen kann, so dass lokale Überhitzungen und ein Aufschmelzen der Dichtung vermieden werden können.

### AUFGABE UND LÖSUNG

Der vorliegenden Erfindung lag die Aufgabe zugrunde, Energiespeicherzellen bereitzustellen, die sich durch eine hohe Energiedichte auszeichnen und die effizient in einen Zellverbund integriert werden können. Weiterhin sollen sich die Energiespeicherzellen auch durch eine verbesserte Sicherheit auszeichnen. Insbesondere lag der Erfindung die Aufgabe zugrunde, die in der erwähnten PCT/EP2022/083072 beschriebenen Zellen weiter zu verbessern.

Diese Aufgabe wird durch die Dichtung mit den Merkmalen des Anspruchs 1, die Deckelbaugruppe mit den Merkmalen des Anspruchs 3 und die Energiespeicherzelle mit den Merkmalen des Anspruchs 5 gelöst. Auch der Verbund aus Energiespeicherzellen mit den Merkmalen des Anspruchs 13 ist Gegenstand der Erfindung. Bevorzugte Ausführungsformen der Erfindung finden sich in den abhängigen Ansprüchen 2, 4 und 6 bis 12.

Die Dichtung weist stets die folgenden Merkmale a. bis d. auf:
a. Sie umfasst ein äußeres Ringsegment.
b. Das äußere Ringsegment mündet an einem seiner zwei Enden in einem nach innen weisenden Kragen, der das äußere Ringsegment an diesem Ende verengt.
c. Der Kragen weist einen inneren Rand auf, der in ein inneres Ringsegment übergeht.
d. Das äußere Ringsegment weist eine nach innen weisende, umlaufende, mit einem Hinterschnitt versehene Nase auf.

Eine solche Dichtung dient dem Verschluss von Gehäusen der Art, wie sie beispielsweise in der EP 3188280 A1 beschrieben sind. Bei deren Montage wird häufig eine Deckelbaugruppe verwendet, die neben der Dichtung weitere Einzelteile umfasst, die durch die Dichtung zusammengehalten werden. Die Dichtung dient dabei als Halteelement, um Teile der Deckelbaugruppe in einer entsprechenden Aufnahme zu fixieren (dies wir unten noch näher erläutert). Beim Komprimieren der Dichtung resultiert die Nase allerdings in einer unsymmetrische Druckverteilung, was die Bildung einer ebenen Zellschulter, die sich zum Aufschweißen von Stromleitern eignet, erschwert.

Überraschenderweise wurde gefunden, dass dieses Problem durch einen einfachen Hinterschnitt der Nase gelöst werden kann. Durch den Hinterschnitt wird Raum geschaffen, in den der Bereich der Dichtung mit der Nase beim Komprimieren expandieren kann, wodurch der Störfaktor "Nase" beim Schließen der Zelle eliminiert wird. Es ist so möglich, beim Zellverschluss eine ebene Kreisringfläche am Kopfbereich der Zelle zu bilden, die für elektrischen Kontaktierungen der Zelle zu Verfügung steht.

Die Dichtung zeichnet sich bevorzugt durch mindestens eines der folgenden zusätzlichen Merkmale a. bis f. aus:
a. Das äußere Ringsegment ist hohlzylindrisch ausgebildet.
b. Das innere Ringsegment ist hohlzylindrisch oder sich konisch verjüngend ausgebildet.
c. Der Hinterschnitt ist als ringförmige, nutartige Vertiefung ausgebildet.
d. Die Nase ist als ringförmige Erhöhung auf der Innenseite des äußeren Ringsegments ausgebildet.
e. Die mit dem Hinterschnitt versehene Nase unterteilt das äußere Ringsegment in ein zentrales Teilsegment und ein endständiges Teilsegment.
f. Der Kragen weist auf seiner Innenseite eine ringförmige Erhebung auf.

Bevorzugt ist die Wandstärke des äußeren Ringsegments im Bereich der nutartigen Vertiefung erniedrigt. Weiterhin ist bevorzugt, dass die Wandstärke des äußeren Ringsegments im Bereich der Nase erhöht ist.

Die erfindungsgemäße Deckelbaugruppe weist stets die unmittelbar folgenden Merkmale a. bis i. auf:
a. Sie umfasst eine Polkappe mit einem kreisförmigen Rand.
b. Sie umfasst eine erste Metallscheibe mit einem kreisförmigen Rand.
c. Sie umfasst eine zweite Metallscheibe mit einem kreisförmigen Rand.
d. Sie umfasst ringförmige Dichtung.
e. Sie umfasst einen ringförmigen Isolator.
f. Die erste Metallscheibe ist zwischen der Polkappe und der zweiten Metallscheibe angeordnet.
g. Der ringförmige Isolator isoliert die erste Metallscheibe und die zweite Metallscheibe elektrisch gegeneinander.
h. Die erste Metallscheibe steht in unmittelbarem Kontakt zur Polkappe.
i. Die ringförmige Dichtung ist auf den kreisförmigen Rand der Polkappe und/oder auf den kreisförmigen Rand der ersten Metallscheibe aufgezogen.

Besonders zeichnet sich die Deckelbaugruppe durch die folgenden Merkmale j. bis l. aus:
j. Die Dichtung ausgebildet wie die oben beschriebene erfindungsgemäße Dichtung.
k. Der kreisförmigen Rand der Polkappe und/oder der ersten Metallscheibe sitzt auf dem Kragen auf.
l. Der kreisförmigen Rand der Polkappe und/oder der ersten Metallscheibe wird von der Nase in seinem Sitz gehalten.

Besonders bevorzugt bilden der Kragen, das zentrale Teilsegment und die Nase eine Aufnahme für den kreisförmigen Rand der Polkappe und/oder der ersten Metallscheibe.

Die Deckelbaugruppe zeichnet sich bevorzugt durch mindestens eines der folgenden zusätzlichen Merkmale a. bis f. aus:
a. Die ringförmige Dichtung ist auf den kreisförmigen Rand der ersten Metallscheibe aufgezogen.
b. Die ringförmige Dichtung ist auf den Rand der Polkappe aufgezogen.
c. Die ringförmige Dichtung ist auf den kreisförmigen Rand der Polkappe und den kreisförmigen Rand der ersten Metallscheibe aufgezogen.
d. Der kreisförmige Rand der ersten Metallscheibe ist U-förmig um den Rand der Polkappe umgeschlagen.

Merkmal a. ist in der Regel dann bevorzugt, wenn der Durchmesser der ersten Metallscheibe größer ist als der Durchmesser der Polkappe. Merkmal b. ist in der Regel dann bevorzugt, wenn der Durchmesser der ersten Metallscheibe kleiner ist als der Durchmesser der Polkappe. Merkmal d. kann dann bevorzugt sein, wenn der Durchmesser der ersten Metallscheibe gleich dem Durchmesser der Polkappe ist.

Besonders bevorzugt ist Merkmal d.

Die erfindungsgemäße Energiespeicherzelle weist stets die unmittelbar folgenden Merkmale a. bis f. auf:
a. Die Energiespeicherzelle umfasst einen Elektroden-Separator-Verbund mit der Sequenz Anode / Separator / Kathode,
b. der Elektroden-Separator-Verbund liegt in Form eines zylindrischen Wickels mit einer ersten endständigen Stirnseite und einer zweiten endständigen Stirnseite und einem dazwischen liegenden Wickelmantel vor,
c. die Zelle umfasst ein luft- und flüssigkeitsdicht verschlossenes Gehäuse, das einen metallischen Gehäusebecher mit einer endständigen kreisförmigen Öffnung und eine Deckelbaugruppe mit einem kreisförmigen Rand, welche die kreisförmige Öffnung verschließt, umfasst,
d. die Deckelbaugruppe ist gemäß einem der Ansprüche 1 oder 2 ausgebildet,
e. der Gehäusebecher umfasst in axialer Abfolge einen Boden, einen Zentralabschnitt und einen Verschlussabschnitt, wobei
   - der Zentralabschnitt zylindrisch ausgebildet ist und in dem Zentralabschnitt der Wickelmantel des als Wickel ausgebildeten Elektroden-Separator-Verbunds mit der Innenseite des Gehäusebechers in Kontakt steht, und
   - in dem Verschlussabschnitt die ringförmige Dichtung der Deckelbaugruppe in einem Presskontakt mit dem Rand der Polkappe und/oder dem Rand der ersten Metallscheibe und der Innenseite des Gehäusebechers steht, und
f. der Gehäusebecher weist in dem Verschlussabschnitt einen die kreisförmige Öffnung definierenden Öffnungsrand auf, der radial nach innen über den von der Dichtung umschlossenen Rand der Polkappe und/oder der ersten Metallscheibe umgebogen ist und der die Deckelbaugruppe einschließlich der Dichtung in der kreisförmigen Öffnung des Gehäusebechers formschlüssig fixiert.

Der Begriff "Rand der Polkappe und/oder der ersten Metallscheibe" umfasst die oben bereits umschriebenen Ausführungsformen, bei denen sich die Durchmesser der Polkappe und der Metallscheibe entweder unterscheiden oder gleich sind. Maßgeblich hinsichtlich des Presskontakts ist das Bauteil mit dem größeren Durchmesser, denn an ihm liegt die Dichtung an. Besonders bevorzugt ist die Variante, bei der der kreisförmige Rand der ersten Metallscheibe U-förmig um den Rand der Polkappe umgeschlagen ist.

In einigen besonders bevorzugten Ausführungsformen weist der radial nach innen umgebogene Öffnungsrand des Gehäusebechers eine höhere Wandstärke auf als der Gehäusebecher in dem Zentralabschnitt.

Durch diese Maßnahme wird gewährleistet, dass sich Stromleiterschienen auf den radial nach innen umgebogenen Öffnungsrand des Gehäusebechers aufschweißen lassen, ohne dass Folgeprobleme bei der Dichtung auftreten. Die erhöhte Dicke des Öffnungsrandes gewährleistet, dass sich die beim Schweißen generierte Wärme besser verteilen kann, so dass lokale Überhitzungen und ein Aufschmelzen der Dichtung vermieden werden können.

Der gleiche Effekt lässt sich erzielen, indem an Stelle der Verdickung des Öffnungsrandes auf den nach innen umgebogenen Öffnungsrand des Gehäusebechers eine kreisringförmige Scheibe (kurz: Ringscheibe) aufgeschweißt wird. Auch so kann eine Auflage für eine Stromleiterschiene gebildet werden. Die Ringscheibe sollte einen Außendurchmesser aufweisen, der den Außendurchmesser des Gehäusebechers nicht überschreitet. Beispielsweise kann der Außendurchmesser im Bereich von 1 cm bis 10 cm, weiter bevorzugt im Bereich von 1,5 cm bis 7 cm, liegen. Dies hängt natürlich von den absoluten Dimensionen der jeweiligen Energiespeicherzelle ab. Die Kreisringbreite der Ringscheibe liegt bevorzugt im Bereich von 2 mm bis 3 cm, bevorzugt im Bereich von 4 mm bis 2 cm, in einigen besonders bevorzugten Ausführungsformen im Bereich von 2 mm bis 5 mm. Die Dicke der Ringscheibe liegt bevorzugt im Bereich von 0,1 mm bis 5 mm, bevorzugt im Bereich von 0,5 mm bis 3 mm. Bevorzugt weist die Ringscheibe in ihrem Zentrum ein kreisrundes Loch auf, durch das die Polkappe von außen zugänglich ist oder durch das eine bevorzugt zentrale Erhebung der Polkappe hindurch ragen kann.

Bevorzugt ist die Ringscheibe auf ihrer Ober- und ihrer Unterseite eben. Hiermit ist in besonders bevorzugten Ausführungsformen gemeint, dass zwischen dem höchsten und dem tiefsten Punkt der Ober- und Unterseite maximal 0,2 mm, weiter bevorzugt maximal 0,08 mm Höhenunterschied bestehen. In einer weiteren bevorzugten Ausführungsform schließt die Ringscheibe mit der Wand des Gehäusebechers in dem Zentralabschnitt einen Winkel von 90° ein.

Bevorzugt wird die Ringscheibe derart auf den Öffnungsrand geschweißt, dass der äußere Rand der Ringscheibe einen gleichmäßigen Abstand zu dem die kreisförmige Öffnung definierenden Öffnungsrand aufweist.

An dieser Stelle ist zu betonen, dass sich das Aufschweißen der Ringscheibe unabhängig von der Ausgestaltung der Dichtung der Deckelbaugruppe realisieren lässt. Das Aufschweißen der Ringscheibe lässt sich grundsätzlich bei jeder Energiespeicherzelle mit den Merkmalen a. bis c. sowie e. und f. des Anspruchs 5 realisieren. Das Merkmal d. des Anspruchs 5 ist in diesem Fall fakultativ.

Der Elektroden-Separator-Verbund steht mit der Innenseite des Gehäusebechers bevorzugt in unmittelbarem Kontakt. Besonders bevorzugt liegt er unmittelbar an der Innenseite des Gehäusebechers an. In einigen Ausführungsformen kann es allerdings vorgesehen sein, die Innenseite, beispielsweise mittels einer Folie, elektrisch zu isolieren. In diesem Fall steht der Elektroden-Separator-Verbunds in Kontakt über die Folie mit der Innenwand in Kontakt.

Der Boden des Gehäusebechers ist bevorzugt kreisförmig ausgebildet. Der Gehäusebecher wird meist durch Tiefziehen gebildet. Es ist aber auch möglich, den Becher durch Einschweißen eines Bodens in ein rohrförmiges Halbteil zu bilden.

Bei der Energiespeicherzelle handelt es sich bevorzugt um eine zylindrische Rundzelle. Der Elektroden-Separator-Verbund umfasst entsprechend die Anode und die Kathode bevorzugt in Form von Bändern. Darüber hinaus umfasst er bevorzugt einen bandförmigen Separator oder zwei bandförmige Separatoren. Die Stirnseiten sind bevorzugt durch einen kreisförmigen Rand begrenzt.

Bevorzugt liegt die Höhe der als zylindrische Rundzelle ausgebildeten Energiespeicherzelle im Bereich von 50 mm bis 150 mm. Ihr Durchmesser liegt bevorzugt im Bereich von 15 mm bis 60 mm. Zylindrische Rundzellen mit diesen Formfaktoren eignen sich insbesondere zur Stromversorgung elektrischer Antriebe von Kraftfahrzeugen.

### Ausführungsform als Lithium-Ionen-Zelle

In einer besonders bevorzugten Ausführungsform der Erfindung ist die Energiespeicherzelle eine Lithium-Ionen-Zelle.

Für die Elektroden der Energiespeicherzelle können im Grunde sämtliche für sekundäre Lithium-lonen-Zellen bekannten Elektrodenmaterialien verwendet werden.

In den negativen Elektroden können als Aktivmaterialien Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Alternativ oder zusätzlich kann auch Lithiumtitanat (Li₄Ti₅O₁₂) oder ein Derivat desselben in der negativen Elektrode enthalten sein, bevorzugt ebenfalls in Partikelform. Weiterhin kann die negative Elektrode als Aktivmaterial mindestens ein Material aus der Gruppe mit Silizium, Aluminium, Zinn, Antimon oder eine Verbindung oder Legierung dieser Materialien, die Lithium reversibel ein- und auslagern kann, beispielsweise Siliziumoxid (insbesondere SiOₓ mit 0 < x < 2), enthalten, gegebenenfalls in Kombination mit Aktivmaterialien auf Kohlenstoffbasis. Zinn, Aluminium, Antimon und Silizium in der Lage, mit Lithium intermetallische Phasen zu bilden. Die Kapazität zur Aufnahme von Lithium übersteigt dabei, insbesondere im Fall von Silizium, die von Graphit oder vergleichbaren Materialien um ein Vielfaches. Oft werden Mischungen aus Silizium- und Kohlenstoff-basierten Speichermaterialien eingesetzt. Weiterhin eignen sich auch dünne Anoden aus metallischem Lithium.

Für die positiven Elektroden kommen als Aktivmaterialien beispielsweise Lithium-MetalloxidVerbindungen und Lithium-Metallphosphat-Verbindungen wie LiCoOz und LiFePO₄ in Frage. Weiterhin gut geeignet sind insbesondere Lithiumnickelmangancobaltoxid (NMC) mit der Summenformel LiNiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al_{0.05})_{0.89}O₂ oder Li₁₊ₓM-O Verbindungen und/oder Mischungen der genannten Materialien können eingesetzt werden. Auch die kathodischen Aktivmaterialien werden bevorzugt partikulär eingesetzt.

Daneben enthalten die Elektroden einer Energiespeicherzelle bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), (Li-)Polyacrylat, Styrol-Butadien-Kautschuk oder Carboxymethylzellulose oder auch Mischungen unterschiedlicher Binder. Übliche Leitmittel sind Ruß, feine Grafite, Kohlenstofffasern, Carbon-Nanotubes und Metallpulver.

Die Energiespeicherzelle umfasst bevorzugt einen Elektrolyten, im Falle einer Lithium-Ionen-Zelle insbesondere einen Elektrolyten auf der Basis mindestens eines Lithiumsalzes wie beispielsweise Lithiumhexafluorophosphat (LiPF₆), das in einem organischen Lösungsmittel gelöst vorliegt (z. B. in einer Mischung organischer Carbonate oder einem cyclischen Ether wie THF oder einem Nitril). Andere einsetzbare Lithium-Salze sind beispielsweise Lithiumtetrafluoroborat (LiBF₄), Lithiumbis(trifluoromethansulfonyl)imid (LiTFSI), Lithiumbis(fluorosulfonyl)imid (LiFSI) und Lithiumbis(oxalato)borat (LiBOB).

Die Nennkapazität einer als zylindrische Rundzelle ausgebildeten Energiespeicherzelle auf Lithium-lonen-Basis beträgt bevorzugt bis zu 15000 mAh. Mit dem Formfaktor von 21 × 70 hat die Energiespeicherzelle in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 x 65 hat die Zelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

### Ausführungsform auf Natrium-Ionen-Basis

In weiteren Ausführungsformen kann es sich bei der Energiespeicherzelle auch um eine Natrium-lonen-Zelle, eine Kalium-Ionen-Zelle, eine Calzium-Ionen-Zelle, eine Magnesium-Ionen-Zelle oder eine Aluminium-Ionen-Zelle handeln. Unter diesen Varianten sind Energiespeicherzellen mit Natrium-Ionen-Zellchemie besonders bevorzugt.

Bevorzugt umfasst die Energiespeicherzelle auf Basis von Natrium-Ionen einen Elektrolyten, der mindestens eines der folgenden Lösungsmittel und mindestens eines der folgenden Leitsalze umfasst:
Als Lösungsmittel kommen insbesondere organische Carbonate, Ether, Nitrile und Mischungen daraus in Frage. Bevorzugte Beispiele sind:
- Carbonate: Propylencarbonat (PC), Ethylencarbonat-Propylencarbonat (EC-PC), Propylencarbonat-Dimethylcarbonat-Ethylmethylcarbonat (PC-DMC-EMC), Ethylencarbonat-Diethylcarbonat (EC-DEC), Ethylencarbonat-Dimethylcarbonat (EC-DMC), Ethylencarbo-nat-Ethylmethylcarbonat (EC-EMC), Ethylencarbonat-Dimethylcarbonat-Ethylmethylcarbonat (EC-DMC-EMC), Ethylencarbonat-Dimethylcarbonat-Diethylcarbonat (EC-DMC-DEC)
- Ether: Tetrahydrofuran (THE), 2-Methyltetrahydrofuran, Dimethylether (OME), 1,4-dioxane (DX), 1,3-dioxolane (DOL), Diethylenglykoldimethylether (DEGDME), Tetraethylenglykoldimethylether (TEGDME)
- Nitrile: Acetonitril (ACN), Adiponitril (AON), y-Butyrolactone (GBL)

Weiterhin kommen auch Trimethylphosphat (TMP) und Tris(2,2,2-trifluoroethyl)phosphat (TFP) in Frage.

Bevorzugte Leitsalze sind:
NaPF₆, Natrium-difluoro(oxalato)borat (NaBOB), NaBF₄, Natriumbis(fluorosulfonyl)imid (NaFSI), Natrium-2-trifluoromethyl-4,5-dicyanoimidazol (NaTDI), Natrium-bis(trifluoromethansulfonyl)imid (NaTFSI), NaAsF₆, NaBF₄, NaClO₄, NaB(C₂O₄)₂, NaP(C₆H₄O₂)₃; NaCF₃SO₃, Natriumtriflat (NaTf) und Et₄NBF₄.

Dem Elektrolyten können in bevorzugten Ausführungsformen Additive zugesetzt sein. Beispiele bevorzugter Additive, insbesondere zur Stabilisierung, sind die folgenden:
Fluoroethylencarbonat (FEC), Transdifluoroethylencarbonat (DFEC), Ethylensulfit (ES), Vinylencarbonat (VC), Bis(2,2,2-trifluoroethyl)ether (BTFE), Natrium-2-trifluoromethyl-4,5-dicyanoimidazol (NaTDI), Natriumbis(fluorosulfonyl)imide (NaFSI), Aluminumchlorid (AlCl3), Ethylensulfat (DTD), Natriumdifluorophosphat (NaPO₂F₂), Natriumdifluoro(oxalato)borat (NaODFB), Natriumdifluorobisoxalatophosphat (NaDFOP) und Tris(trimethylsilyl)borat (TMSB).

Bei dem negativen Elektrodenmaterial einer Energiespeicherzelle auf Basis von Natrium-Ionen handelt es sich bevorzugt um mindestens eines der folgenden Materialien:
- Kohlenstoff, besonders präferiert Hardcarbon (rein oder mit Stickstoff- und/oder Phosphor-Dotierung) oder Softcarbon oder Graphene-basierte Materialien (mit N-dotierung); Kohlenstoffnanotubes, Graphit
- Phosphor oder Schwefel (Konversionsanode)
- Polyanionen: Na₂Ti₃O₇, Na₃Ti₂(PO₄)₃, TiP₂O₇, TiNb₂O₇, Na-Ti-(PO₄)₃, Na-V-(PO₄)₃
- Preussisch Blau: Na-arme Variante (für Systeme mit wässrigem Elektrolyt)
- Übergangsmetalloxide: V₂O₅, MnO₂, TiO₂, Nb₂O₅, Fe₂O₃, Na₂Ti₃O₇, NaCrTiO₄, Na₄Ti₅O₁₂
- MXene mit M= Ti, V, Cr, Mo oder Nb und A = Al, Si, und Ga sowie X= C und/oder N, z.B. Ti₃C₂
- Organisch: z.B. Na-Terephthalate (Na₂C₈H₂O₄)

Alternativ kann anodenseitig grundsätzlich auch eine Na-Metallanode zum Einsatz kommen.

Bei dem positiven Elektrodenmaterial einer Energiespeicherzelle auf Basis von Natrium-Ionen handelt es sich beispielsweise um mindestens eines der folgenden Materialien:
- Polyanionen: NaFePO₄ (Triphylit-Typ), Na₂Fe(P₂O₇), Na₄Fe₃(PO₄)₂(P₂O₇), Na₂FePO₄F, Na/Na₂[Fe_{1/2}Mn_{1/2}]PO₄F, Na₃V₂(PO₄)₂F₃, Na₃V₂(PO₄)₃, Na₄(CoMnNi)₃(PO₄)₂P₂O₇, Na-CoPO₄, Na₂CoPO₄F
- Silikate: Na₂MnSiO₄, Na₂FeSiO₄
- Schichtoxide: NaCoO₂, NaFeO₂, NaNiO₂, NaCrO₂, NaVO₂, NaTiO₂, Na(FeCo)O₂, Na(Ni-FeCo)₃O₂, Na(NiFeMn)O₂, and Na(NiFeCoMn)O₂, Na(NiMnCo)O₂

Daneben enthalten die Elektroden einer Energiespeicherzelle bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei die Aktivmaterialien bevorzugt partikulär eingesetzt werden und benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), (Na-)Polyacrylat, Styrol-Butadien-Kautschuk, (Na-)Alginat oder Carboxymethylzellulose oder auch Mischungen unterschiedlicher Binder. Übliche Leitmittel sind Ruß, feine Grafite, Kohlenstofffasern, Carbon-Nanotubes und Metallpulver.

Besonders bevorzugt bestehen bei einer Energiespeicherzelle auf Basis von Natrium-Ionen-Technologie sowohl der Anoden- als auch der Kathodenstromkollektor aus Aluminium oder einer Aluminiumlegierung. Auch das Gehäuse und die Kontaktplatten sowie ggf. vorhandene weitere Stromleiter innerhalb des Gehäuses können aus Aluminium oder aus der Aluminiumlegierung bestehen.

### Bevorzugte Wandstärken des Gehäusebechers

Besonders bevorzugt zeichnet sich die Energiespeicherzelle durch mindestens eines der unmittelbar folgenden Merkmale a. bis c. aus:
a. Der radial nach innen umgebogene Öffnungsrand des Gehäusebechers ist um einen Faktor im Bereich von 1,5 bis 2 dicker ausgebildet als der Gehäusebecher in dem Zentralabschnitt.
b. Der Gehäusebecher weist in dem Zentralabschnitt eine Wandstärke im Bereich von 0,1 mm bis 0,4 mm, bevorzugt im Bereich von 0,25 mm bis 0,3 mm, auf.
c. Der radial nach innen umgebogene Öffnungsrand des Gehäusebechers weist eine Wandstärke im Bereich von 0,15 mm bis 0,8 mm, bevorzugt im Bereich von 0,375 mm bis 0,6 mm, auf.

Es ist bevorzugt, dass die unmittelbar vorstehenden Merkmale a. und b. sowie a. und c. in Kombination realisiert sind. Besonders bevorzugt sind alle drei unmittelbar vorstehenden Merkmale a. bis c. in Kombination realisiert.

Der Boden des Gehäusebechers weist bevorzugt eine Dicke im Bereich von 0,2 mm bis 2 mm auf.

### Bevorzugte Realisierungsvarianten betreffend die höhere Wandstärke des Öffnungsrands

Zur Realisierung der höheren Wandstärke des Öffnungsrands kann bei der Herstellung des Gehäusebechers bereits ein Ausgangsmaterial verwendet werden, das in Bereichen, die zur Bildung des Öffnungsrandes vorgesehen sind, verdickt ist. Besonders bevorzugt ist es allerdings, zur Realisierung der höheren Wandstärke den Öffnungsrand durch entsprechende Biegung oder Faltung der Wand des Gehäusebechers zu verstärken.

Entsprechend zeichnet sich die erfindungsgemäße bevorzugt durch mindestens eines der unmittelbar folgenden Merkmale a. bis c. aus:
a. Der radial nach innen umgebogene Öffnungsrand des Gehäusebechers ist [zur Erzielung der doppellagig ausgebildet.
b. Der doppellagig ausgebildete Öffnungsrand ist durch ein Falten oder Umbiegen des Öffnungsrandes gebildet.
c. Der doppellagig ausgebildete Öffnungsrand weist einen U-förmigen Querschnitt auf, insbesondere als Ergebnis der Faltung oder Umbiegung gemäß unmittelbar vorstehendem Merkmal b..

Es ist bevorzugt, dass die unmittelbar vorstehenden Merkmale a. und b., besonders bevorzugt alle drei unmittelbar vorstehenden Merkmale a. bis c., in Kombination realisiert sind.

Die Faltung oder Umbiegung zwecks Ausbildung des doppellagigen Öffnungsrands kann nach außen oder nach innen hin erfolgen. Dies resultiert in unterschiedlichen Varianten des doppellagigen Öffnungsrands.

Besonders bevorzugt zeichnet sich die Energiespeicherzelle durch mindestens eines der unmittelbar folgenden Merkmale a. bis c. aus:
a. Der doppellagig ausgebildete Öffnungsrand weist eine erste Lage auf, die unmittelbar in Kontakt mit der den Rand der Deckelbaugruppe umschließenden Dichtung steht, sowie eine zweite Lage parallel zur ersten auf auf einer der Dichtung abgewandten Seite der ersten Lage.
b. Die erste Lage wird begrenzt durch eine Schnittkante, die radial nach außen weist.
c. Die zweite Lage wird begrenzt durch eine Schnittkante, die radial nach außen weist.

Es ist bevorzugt, dass die unmittelbar vorstehenden Merkmale a. und b. oder die unmittelbar vorstehenden Merkmale b. und c. in Kombination realisiert sind.

Bei der Variante mit den Merkmalen a. und b. ist besonders vorteilhaft, dass die nach außen weisende Schnittkante vor Korrosion geschützt ist, da sie durch die zweite Lage und die Außenwand des Bechers vor der Umgebung der Zelle abgeschirmt wird.

Der Gehäusebecher besteht bevorzugt aus Aluminium, einer Aluminiumlegierung oder einem Stahlblech, beispielsweise einem vernickelten Stahlblech.

Geeignete Aluminiumlegierungen für den Gehäusebecher sind beispielsweise Al-Legierungen vom Typ 1235, 1050, 1060, 1070, 3003, 5052, Mg3, Mg212 (Serie 3000) und GM55. Weiterhin geeignet sind AlSi, AlCuTi, AlMgSi, AlSiMg, AlSiCu, AlCuTiMg und AlMg. Der Aluminiumanteil besagter Legierungen liegt bevorzugt oberhalb von 99,5 %.

### Auflagefläche für Stromleiter

Besonders bevorzugt zeichnet sich die Energiespeicherzelle durch mindestens eines der unmittelbar folgenden Merkmale a. bis d. aus:
a. Der radial nach innen umgebogene Öffnungsrand, insbesondere der doppellagig ausgebildete Öffnungsrand, umfasst eine erste, innenliegende Seite, die in unmittelbarem Kontakt mit der Dichtung steht, und eine zweite, von der Dichtung abgewandte Seite.
b. Die zweite Seite hat die Form einer kreisringförmigen ebenen Fläche oder umfasst eine kreisringförmige ebene Fläche.
c. Die kreisringförmige ebene Fläche bildet einen Kreisring mit einer Kreisringbreite im Bereich von 1 mm bis 5 mm, bevorzugt im Bereich von 1 mm bis 3 mm, besonders bevorzugt im Bereich von 1,2 mm bis 1,3 mm, auf.
d. Die kreisringförmige ebene Fläche schließt mit der Wand des Gehäusebechers in dem Zentralabschnitt einen Winkel von 90° ein.

Es ist bevorzugt, dass die unmittelbar vorstehenden Merkmale a. und b. und c. oder die unmittelbar vorstehenden Merkmale a. und b. und d. oder die unmittelbar vorstehenden Merkmale a. bis d. in Kombination realisiert sind.

In diesen bevorzugten Ausführungsformen wird ein Anschweißen eines elektrischen Leiters aus Metall, insbesondere einer metallischen Ableiterschiene, dadurch erleichtert, dass der radial nach innen umgebogene Öffnungsrand gezielt vergrößert und flach ausgebildet wird. Die kreisringförmige ebene Fläche dient entsprechend bevorzugt zum Anschweißen des elektrischen Leiters aus Metall.

Es ist im Hinblick auf den anzuschweißenden elektrischen Leiter besonders vorteilhaft, wenn sich die kreisringförmige Fläche durch einen hohen Grad an Ebenheit auszeichnet. Besonders zeichnet sich die erfindungsgemäße Energiespeicherzelle durch das unmittelbar folgende Merkmal a. aus:
a. Zwischen dem höchsten und dem tiefsten Punkt der kreisringförmigen ebenen Fläche bestehen maximal 0,08 mm Höhenunterschied.

Die auf der zweiten Seite des doppellagig ausgebildeten Öffnungsrands befindliche kreisringförmige ebene Fläche ist also bevorzugt dadurch definiert, dass in ihrem Bereich zwischen dem höchsten und dem tiefsten Punkt der kreisringförmigen ebenen Fläche maximal 0,08 mm Höhenunterschied bestehen. Oder mit anderen Worten: Dieser Grad an Ebenheit definiert bevorzugt die kreisringförmige Fläche.

Bevorzugt bildet die kreisringförmige ebene Fläche im Falle von Zellen mit einem Durchmesser ≤ 26 mm Breite einen Kreisring mit einer Kreisringbreite im Bereich von 0,5 mm - 1,5 mm, bevorzugt von 1 mm bis 1,5 mm.

Bevorzugt bildet die kreisringförmige ebene Fläche im Falle von Zellen mit einem Durchmesser > 26 mm Breite einen Kreisring mit einer Kreisringbreite im Bereich von 0,8 mm - 3,5 mm, bevorzugt von 1 mm bis 2,5 mm.

In besonders bevorzugten Ausführungsformen weist der radial nach innen umgebogene Öffnungsrand des Gehäusebechers die höhere Wandstärke überall im Bereich der kreisförmigen ebenen Fläche auf. Da die kreisförmige ebene Fläche zum Anschweißen des Ableiters dient, ist so eine gute Abschirmung der Dichtung in diesem sensiblen Bereich gewährleistet.

### Bevorzugte Ausgestaltung des Gehäuses

Besonders bevorzugt zeichnet sich die erfindungsgemäße Energiespeicherzelle durch mindestens eines der unmittelbar folgenden Merkmale a. bis c. aus:
a. Der Zentralabschnitt und der Verschlussabschnitt werden durch eine Einbuchtung, welche die Außenseite des Gehäusebechers ringförmig umläuft, getrennt.
b. Der Gehäusebecher weist in dem Zentralabschnitt und dem Verschlussabschnitt einen identischen maximalen Außendurchmesser auf.
c. Im Bereich der Einbuchtung ist der Außendurchmesser des Gehäusebechers um das 4- bis 12-fache der Wandstärke des Gehäusebechers in diesem Bereich reduziert.

Es ist bevorzugt, dass zumindest die unmittelbar vorstehenden Merkmale a. und b. in Kombination realisiert sind. Besonders bevorzugt sind alle drei unmittelbar vorstehenden Merkmale a. bis c. in Kombination realisiert.

Bevorzugt liegt die ringförmige Dichtung in dem Verschlussabschnitt komprimiert vor. Sie wird bevorzugt radial gegen den kreisförmigen Rand der Polkappe und/oder der ersten Metallscheibe gepresst.

### Elektrische Kontaktierung der Elektroden

Wie eingangs ausgeführt, soll die vorliegende Erfindung Energiespeicherzellen bereitstellen, die sich durch eine hohe Energiedichte auszeichnen. Dies ist besonders gut möglich, wenn der Elektrodenwickel effizient an das Gehäuse angebunden wird, wie es in der eingangs erwähnten WO 2017/215900 A1 beschrieben ist.

Besonders bevorzugt zeichnet sich die erfindungsgemäße Energiespeicherzelle durch mindestens eines der unmittelbar folgenden Merkmale a. bis e. aus:
a. Die Anode des Elektroden-Separator-Verbunds umfasst einen Anodenstromkollektor, der einen ersten Längsrand und einen dazu parallelen zweiten Längsrand aufweist.
b. Der Anodenstromkollektor umfasst einen Hauptbereich, der mit einer Schicht aus negativem Elektrodenmaterial beladen ist, sowie einen freien Randstreifen, der sich entlang seines ersten Längsrands erstreckt und der nicht mit dem negativen Elektrodenmaterial beladen ist.
c. Die Kathode des Elektroden-Separator-Verbunds umfasst einen Kathodenstromkollektor, der einen ersten Längsrand und einen dazu parallelen zweiten Längsrand aufweist.
d. Der Kathodenstromkollektor umfasst einen Hauptbereich, der mit einer Schicht aus positivem Elektrodenmaterial beladen ist, sowie einen freien Randstreifen, der sich entlang seines ersten Längsrands erstreckt und der nicht mit dem Elektrodenmaterial beladen ist.
e. Die Anode und die Kathode sind innerhalb des Elektroden-Separator-Verbunds derart angeordnet, dass der erste Längsrand des Anodenstromkollektors aus der ersten endständigen Stirnseite und der erste Längsrand des Kathodenstromkollektors aus der zweiten endständigen Stirnseite des Elektroden-Separator-Verbunds austritt.

Es ist bevorzugt, dass alle fünf unmittelbar vorstehenden Merkmale a. bis e. in Kombination realisiert sind.

In einer Weiterbildung dieser bevorzugten Ausführungsform ist es bevorzugt, dass sich die erfindungsgemäße Energiespeicherzelle durch mindestens eines der unmittelbar folgenden Merkmale a. bis d. auszeichnet:
a. die Energiespeicherzelle umfasst ein Kontaktblech, das auf dem ersten Längsrand des Anodenstromkollektors aufsitzt und die erste endständige Stirnseite abdeckt oder das auf dem ersten Längsrand des Kathodenstromkollektors aufsitzt und die zweite endständige Stirnseite abdeckt mit diesem durch Verschweißung verbunden ist.
b. Das Kontaktblech ist mit dem ersten Längsrand des Anodenstromkollektors oder dem ersten Längsrand des Kathodenstromkollektors durch Verschweißung verbunden.
c. Das Kontaktblech ist mit dem Boden des Gehäusebechers, insbesondere durch Verschwei-ßung, verbunden.
d. Das Kontaktblech ist mit der Deckelbaugruppe elektrisch verbunden.

Es ist bevorzugt, dass zumindest die unmittelbar vorstehenden Merkmale a. bis c. oder die Merkmale a. und b. und d. in Kombination realisiert sind.

In einigen besonders bevorzugten Ausführungsformen umfasst die Energiespeicherzelle ein Kontaktblech, das auf dem ersten Längsrand des Anodenstromkollektors aufsitzt und mit diesem durch Verschweißung verbunden ist, und ein weiteres Kontaktblech, das auf dem ersten Längsrand des Kathodenstromkollektors aufsitzt und mit diesem durch Verschweißung verbunden ist.

In einer möglichen Weiterbildung ist es bevorzugt, dass sich die erfindungsgemäße Energiespeicherzelle durch das unmittelbar folgende Merkmal a. auszeichnet:
a. Der erste Längsrand des Anodenstromkollektors oder der erste Längsrand des Kathodenstromkollektors sitzt unmittelbar auf dem Boden des Gehäusebechers auf und ist mit diesem durch Verschweißung verbunden.

In dieser Ausführungsform ist also einer der Stromkollektoren unmittelbar mit dem Gehäuse bzw. dem Gehäusebecher verbunden. In einer bevorzugten Weiterbildung dieser Ausführungsform sitzt auf dem Längsrand des anderen Stromkollektors ein Kontaktblech auf. Dieses ist dann elektrisch mit der Deckelbaugruppe verbunden.

### Ausführungsformen des Kontaktblechs

In einer besonders bevorzugten Ausführungsform der Erfindung zeichnet sich das mit dem Anodenstromkollektor elektrisch verbundene Kontaktblech durch mindestens eines der unmittelbar folgenden Merkmale a. und b. aus:
a. Das Kontaktblech besteht aus Nickel oder Kupfer oder Titan oder eine Nickel- oder Kupfer- oder Titanlegierung oder Edelstahl, beispielsweise vom Typ 1.4303 oder 1.4404 oder vom Typ SUS304, oder aus nickelplattiertem Kupfer.
b. Das Kontaktblech besteht aus dem gleichen Material wie der Anodenstromkollektor.

In einer weiteren besonders bevorzugten Ausführungsform der Erfindung zeichnet sich das mit dem Kathodenstromkollektor elektrisch verbundene Kontaktblech durch mindestens eines der unmittelbar folgenden Merkmale a. und b. aus:
a. Das Kontaktblech besteht aus Aluminium oder einer Aluminiumlegierung.
b. Das Kontaktblech besteht aus dem gleichen Material wie der Anodenstromkollektor.

Besonders bevorzugt zeichnen sich das mit dem Anodenstromkollektor verbundene Kontaktblech und/oder das mit dem Kathodenstromkollektor elektrisch verbundene Kontaktblech durch mindestens eines der unmittelbar folgenden Merkmale a. bis g. aus:
a. Das Kontaktblech weist eine bevorzugt gleichmäßige Dicke im Bereich von 50 µm bis 600 µm, bevorzugt im Bereich von 150 µm bis 350 µm, auf.
b. Das Kontaktblech weist zwei sich gegenüberliegenden Flachseiten auf und erstreckt sich im Wesentlichen nur in einer Dimension.
c. Das Kontaktblech ist eine Scheibe oder eine polygonale Platte.
d. Das Kontaktblech ist derart dimensioniert, dass es mindestens 60 %, bevorzugt mindestens 70 %, besonders bevorzugt mindestens 80 % der ersten endständigen oder der zweiten endständigen Stirnseite abdeckt.
e. Das Kontaktblech weist mindestens eine Durchbrechung, insbesondere mindestens ein Loch und oder mindestens einen Schlitz, auf.
f. Das Kontaktblech weist mindestens eine Sicke auf, die auf einer Flachseite des Kontaktblechs als längliche Vertiefung und auf der gegenüberliegenden Flachseite als längliche Erhöhung zu Tage tritt, wobei das Kontaktblech mit der Flachseite, welche die längliche Erhöhung trägt, auf dem ersten Längsrand des jeweiligen Stromkollektors aufsitzt.
g. Das Kontaktblech ist im Bereich der Sicke mit dem ersten Längsrand des jeweiligen Stromkollektors verschweißt, insbesondere über eine oder mehrere in der Sicke angeordnete Schweißnähte.

Es ist besonders bevorzugt, dass die unmittelbar vorstehenden Merkmale a. und b. und d. in Kombination miteinander realisiert sind. In einer bevorzugten Ausführungsform sind die Merkmale a. und b. und d. in Kombination mit einem der Merkmale c. oder e. oder den Merkmalen f. und g realisiert. Besonders bevorzugt sind alle Merkmale a. bis g. in Kombination miteinander realisiert.

Die möglichst großflächige Abdeckung der Stirnseite ist für das thermische Management der erfindungsgemäßen Energiespeicherzelle von Bedeutung. Je größer die Abdeckung ist, desto eher ist es möglich, den ersten Längsrand des jeweiligen Stromkollektors möglichst über seine gesamte Länge zu kontaktieren. In Elektroden-Separator-Verbund gebildete Wärme kann so gut über das Kontaktblech abgeführt werden.

Es hat sich in einigen Ausführungsformen als vorteilhaft erwiesen, den Längsrand des Stromkollektors einer Vorbehandlung zu unterziehen, bevor das Kontaktblech aufgesetzt wird. Insbesondere kann in den Längsrand mindestens eine Vertiefung eingefalzt werden, die zu der mindestens einen Sicke bzw. der länglichen Erhöhung auf der der ersten endständigen Stirnseite zugewandten Flachseite des Kontaktblechs korrespondiert.

Der Längsrand des Stromkollektors kann auch durch eine Vorbehandlung einer gerichteten Umformung unterzogen worden sein. Beispielsweise kann er in eine definierte Richtung umgebogen sein.

Die mindestens eine Durchbrechung in dem Kontaktblech kann beispielsweise zweckmäßig sein, um den Elektroden-Separator-Verbund mit einem Elektrolyten tränken zu können.

### Bevorzugte Ausgestaltung von Stromkollektoren und Separatoren

Der Anodenstromkollektor, der Kathodenstromkollektor und der Separator oder die Separatoren der erfindungsgemäßen Zelle weisen bevorzugt die folgenden Dimensionen auf:
- Eine Länge im Bereich von 0,5 m bis 25 m
- Eine Breite im Bereich 40 mm bis 145 mm

In dem als Wickel ausgebildeten Elektroden-Separator-Verbund liegen die bandförmige Anode, die bandförmige Kathode und der oder die bandförmigen Separatoren bevorzugt spiralförmig aufgewickelt vor. Zur Herstellung des Elektroden-Separator-Verbunds werden die bandförmigen Elektroden und der oder die bandförmigen Separatoren einer Wickelvorrichtung zugeführt und in dieser bevorzugt um eine Wickelachse herum spiralförmig aufgewickelt. Eine Verklebung der Elektroden und der Separatoren oder eine Kontaktierung bei erhöhten Temperaturen ist hierbei meist nicht erforderlich. In einigen Ausführungsformen werden die Elektroden und der Separator oder die Separatoren auf einen zylindrischen oder hohlzylindrischen Wickelkern aufgewickelt, der auf einem Wickeldorn sitzt und nach dem Wickeln im Wickel verbleibt.

Der Wickelmantel kann beispielsweise durch eine Kunststofffolie oder ein Klebeband gebildet sein. Es ist auch möglich, dass der Wickelmantel durch eine oder mehrere Separatorwindungen gebildet ist.

Die Stromkollektoren der erfindungsgemäßen Energiespeicherzelle dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert.

Im Falle einer als Lithium-Ionen-Zelle ausgebildeten erfindungsgemäßen Energiespeicherzelle eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Als Kupferlegierung können insbesondere Werkstoffe vom Typ EN CW-004A bzw. EN CW-008A mit einem Kupferanteil von mindestens 99,9% eingesetzt werden. Als Nickellegierungen kommen insbesondere Legierungen vom Typ NiFe, NiCu, CuNi, NiCr und NiCrFe in Frage. Als Nickellegierungen kommen insbesondere Legierungen vom Typ NiFe, NiCu, CuNi, NiCr und NiCrFe in Frage. Auch Edelstahl kommt grundsätzlich in Frage, beispielsweise vom Typ 1.4303 oder 1.4404 oder vom Typ SUS304.

Als Metall für den Kathodenstromkollektor eignen sich im Falle einer als Lithium-Ionen-Zelle ausgebildeten erfindungsgemäßen Energiespeicherzelle insbesondere Aluminium oder auch andere elektrisch leitfähige Materialien, darunter auch Aluminiumlegierungen.

Geeignete Aluminiumlegierungen für den Kathodenstromkollektor sind beispielsweise Al-Legierungen vom Typ 1235, 1050, 1060, 1070, 3003, 5052, Mg3, Mg212 (Serie 3000) und GM55. Weiterhin geeignet sind AlSi, AlCuTi, AlMgSi, AISiMg, AlSiCu, AlCuTiMg und AlMg. Der Aluminiumanteil besagter Legierungen liegt bevorzugt oberhalb von 99,5 %.

Bevorzugt handelt es sich bei dem Anodenstromkollektor und/oder dem Kathodenstromkollektor jeweils um eine bandförmige Metallfolie mit einer Dicke im Bereich von 4 µm bis 30 µm. Neben Folien können als Stromkollektoren allerdings auch andere bandförmige Substrate wie metallische oder metallisierte Vliese oder offenporige metallische Schäume oder Streckmetalle verwendet werden.

Die Stromkollektoren sind bevorzugt beidseitig mit dem jeweiligen Elektrodenmaterial beladen.

Es ist bevorzugt, dass die Längsränder des oder der Separatoren die Stirnseiten des als Wickel ausgebildeten Elektroden-Separator-Verbunds bilden.

### Mögliche Ausgestaltungen der Deckelbaugruppe

Die erfindungsgemäße Zelle zeichnet sich bevorzugt dadurch aus, dass in die Deckelbaugruppe eine CID-Funktion integriert ist, die gewährleistet, dass im Falle eines zu hohen Drucks in der Zelle der Druck aus dem Gehäuse entweichen kann und gleichzeitig der elektrische Kontakt zwischen der Deckelbaugruppe und dem Elektroden-Separator-Verbund abbrechen kann.

Besonders bevorzugt zeichnet sich die erfindungsgemäße Energiespeicherzelle entsprechend durch mindestens eines der unmittelbar folgenden Merkmale a. und b. aus:
a. Die erste Metallscheibe der Deckelbaugruppe umfasst eine metallischen Membran, die sich bei einem Überdruck innerhalb des Gehäuses nach außen wölbt oder birst.
b. Die erste Metallscheibe der Deckelbaugruppe mit der Membran steht in elektrischem Kontakt mit einem elektrischen Leiter, der elektrisch an den Anodenstromkollektor oder an den Kathodenstromkollektor angekoppelt ist.

Es ist bevorzugt, dass die unmittelbar vorstehenden Merkmale a. und b. in Kombination realisiert sind.

### Mögliche Ausgestaltungen der Dichtung

Um die Auswirkungen des Schweißvorgangs auf die Dichtung zusätzlich zu beschränken, ist es erfindungsgemäß bevorzugt, besonders temperaturbeständige Kunststoffe als Dichtungsmaterial einzusetzen.

In einer Weiterbildung dieser bevorzugten Ausführungsform ist es entsprechend bevorzugt, dass sich die erfindungsgemäße Energiespeicherzelle durch mindestens eines der unmittelbar folgenden Merkmale a. und b. auszeichnet:
a. Die Dichtung besteht aus einem Kunststoffmaterial, das einen Schmelzpunkt > 200 °C, bevorzugt > 300 °C, besonders bevorzugt einen Schmelzpunkt > 300 °C und < 350 °C, aufweist.
b. Bei dem Kunststoffmaterial handelt es sich um ein Polyetheretherketon (PEEK), ein Polyimid (PI), ein Polyphenylensulfid (PPS) oder ein Polytetrafluorethylen (PTFE) oder ein Polyamid (PA) oder ein Polyphtalamid (PPA) oder ein Polybutylenterephthalat (PBT) oder ein Perfluoralkoxy-Polymere (PFA) oder ein Ethylen-Propylen-Dien-Kautschuk (EPDM).

Es ist bevorzugt, dass die unmittelbar vorstehenden Merkmale a. und b. in Kombination realisiert sind.

### Erfindungsgemäßer Verbund aus Energiespeicherzellen

Der erfindungsmäße Verbund aus Energiespeicherzellen zeichnet sich stets durch die folgenden Merkmale aus:
a. Der Verbund umfasst mindestens zwei der oben beschriebenen Energiespeicherzellen und
b. der Verbund umfasst mindestens einen elektrischen Leiter aus einem Metall, der mit den radial nach innen umgebogenen Öffnungsrändern der Gehäusebecher der mindestens zwei Energiespeicherzellen durch Verschweißung verbunden ist.

Bei dem mindestens einen Leiter kann es sich beispielsweise um einen Leiter, insbesondere eine Schiene, aus Aluminium oder einer Aluminiumlegierung handeln.

Als Aluminiumlegierung kommen für den Leiter beispielsweise Al-Legierungen vom Typ 1235, 1050, 1060, 1070, 3003, 5052, Mg3, Mg212 (Serie 3000) und GM55 in Frage. Weiterhin geeignet sind AlSi, AlCuTi, AlMgSi, AlSiMg, AlSiCu, AlCuTiMg und AlMg. Der Aluminiumanteil besagter Legierungen liegt bevorzugt oberhalb von 99,5 %.

In einigen bevorzugten Ausführungsformen ist der Leiter ein Metallblechstreifen, insbesondere aus Aluminium, mit einer Dicke im Bereich von 2 bis 5 mm, besonders bevorzugt mit einer Dicke von 3,5 mm.

### KURZBESCHREIBUNG DER ZEICHNUNGEN

Weitere Merkmale und Vorteile der Erfindung ergeben sich aus den Ansprüchen und aus der nachfolgenden Beschreibung von bevorzugten Ausführungsbeispielen der Erfindung in Verbindung mit den Zeichnungen. Die einzelnen Merkmale können dabei jeweils für sich oder in Kombination miteinander verwirklicht sein.

### In den Zeichnungen zeigen schematisch

- Fig. 1 eine Gesamtansicht (Querschnittsdarstellung) einer erfindungsgemäßen Energiespeicherzelle.
- Fig. 2 einen Elektroden-Separator-Verbund, der Bestandteil einer erfindungsgemäßen Energiespeicherzelle ist, sowie dessen Komponenten,
- Fig. 3 eine erfindungsgemäße Energiespeicherzelle mit zwei angeschweißten elektrischen Leitern,
- Fig. 4 eine vergrößerte Darstellung von Schweißnähten,
- Fig. 5 eine Draufsicht auf ein Deckelbauteil einer erfindungsgemäßen Zelle gemäß Fig. 1,
- Fig. 6 einen Ausschnitt eines Querschnitts durch eine erfindungsgemäße Deckelbaugruppe, die eine erfindungsgemäße Dichtung umfasst, und
- Fig. 7 einen Ausschnitt aus einer Fotografie eines Schnitts durch ein mittels einer Deckelbaugruppe gemäß Fig. 6 verschlossenes Gehäuse.

### DETAILLIERTE BESCHREIBUNG DER AUSFÜHRUNGSBEISPIELE

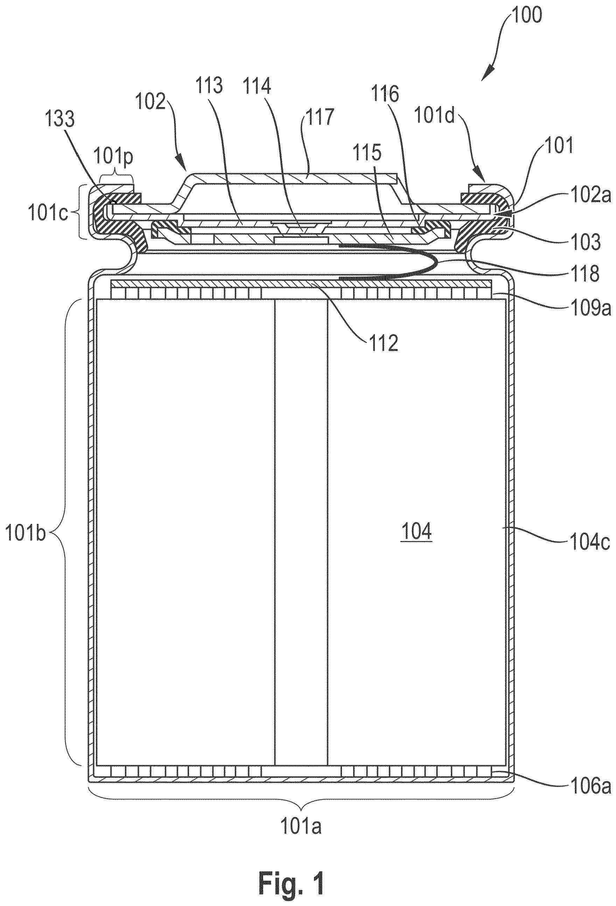

**Fig. 1** zeigt eine erfindungsgemäße Energiespeicherzelle 100 mit einem luft- und flüssigkeitsdicht verschlossenen Gehäuse, das einen metallischen Gehäusebecher 101 mit einer endständigen kreisförmigen Öffnung und eine Deckelbaugruppe 102 mit einem kreisförmigen Rand 102a, welche die kreisförmige Öffnung verschließt, umfasst. Die Zelle umfasst weiterhin eine ringförmige Dichtung 103 aus einem elektrisch isolierenden Material, die den kreisförmigen Rand 102a der Deckelbaugruppe 102 umschließt und den Gehäusebecher 101 und die Deckelbaugruppe 102 elektrisch voneinander isoliert. Der Gehäusebecher 101 umfasst in axialer Abfolge einen Boden 101a, einen Zentralabschnitt 101b und einen Verschlussabschnitt 101c, wobei der Zentralabschnitt 101b zylindrisch ausgebildet ist und in dem Zentralabschnitt 101b der Wickelmantel 104c des als Wickel ausgebildeten Elektroden-Separator-Verbunds 104 mit der Innenseite des Gehäusebechers 101 in Kontakt steht, und in dem Verschlussabschnitt 101c die ringförmige Dichtung 103 in einem Presskontakt mit der Deckelbaugruppe 102 und der Innenseite des Gehäusebechers 101 steht. Der Gehäusebecher 101 weist in dem Verschlussabschnitt 101c einen die kreisförmige Öffnung definierenden Öffnungsrand 101d auf, der radial nach innen über den von der Dichtung 103 umschlossenen Rand 102a der Deckelbaugruppe 102 umgebogen ist und der die Deckelbaugruppe 102 einschließlich der Dichtung 103 in der kreisförmigen Öffnung des Gehäusebechers 101 formschlüssig fixiert. Der radial nach innen umgebogene Öffnungsrand 101d des Gehäusebechers 101 weist eine höhere Wandstärke auf als der Gehäusebecher 101 in dem Zentralabschnitt 101b. Es ist in der Folge möglich, Verschweißungsvorgänge an dem Öffnungsrand 101d vorzunehmen ohne dass die Dichtung 103 Schaden nimmt.

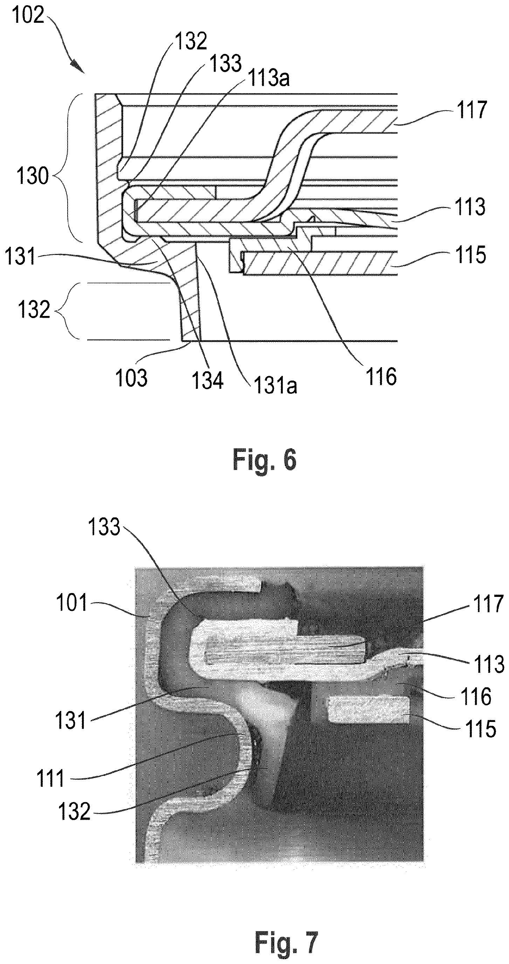

Die Dichtung weist die mit einem Hinterschnitt versehene Nase 133 auf. Die Nase ist samt der Dichtung komprimiert und damit deformiert und in eine von dem Hinterschnitt (vgl. Fig. 6) gebildete Vertiefung geschoben.

Die Zelle 100 umfasst auch einen Elektroden-Separator-Verbund 104 in Form eines zylindrischen Wickels mit der Sequenz Anode / Separator / Kathode, der allerdings hier nur schematisch dargestellt ist. Zu erkennen sind lediglich der Längsrand 106a des Anodenstromkollektors 106, der aus der Stirnseite 104a des Elektroden-Separator-Verbunds 104 austritt, und der Längsrand 109a des Anodenstromkollektors 109, der aus der Stirnseite 104b des Elektroden-Separator-Verbunds 104 austritt. Der Längsrand 106a ist bevorzugt über seine gesamte Länge unmittelbar mit dem Gehäuseboden 101a verschweißt. Der Längsrand 109a ist bevorzugt über seine gesamte Länge unmittelbar mit dem Kontaktblech 112 verschweißt. Das Kontaktblech 112 ist wiederum über den elektrischen Leiter 118 mit der Deckelbaugruppe 102 verbunden, die unten noch näher beschrieben wird.

Die Zelle 100 weist üblicherweise eine Höhe im Bereich von 60 mm bis 10 mm auf, ihr Durchmesser liegt bevorzugt im Bereich von 20 mm bis 50 mm. Der Gehäusebecher 101 weist in dem Zentralabschnitt 101b üblicherweise eine Wandstärke im Bereich von 0,1 mm bis 0,3 mm auf. Der radial nach innen umgebogene Öffnungsrand 101d des Gehäusebechers 101 ist um einen Faktor im Bereich von 1,5 bis 2 dicker ausgebildet als der Gehäusebecher 101 in dem Zentralabschnitt 101b. Er umfasst eine erste, innenliegende Seite, die in unmittelbarem Kontakt mit der Dichtung 103 steht, und eine zweite, von der Dichtung 103 abgewandte Seite. Die zweite Seite umfasst die kreisringförmige ebene Fläche 101p. Diese bildet einen Kreisring mit einer bevorzugten Kreisringbreite im Bereich von 0,8 mm bis 3 mm auf und schließt mit der Wand des Gehäusebechers 101 in dem Zentralabschnitt 101b einen Winkel von 90° ein. Zwischen dem höchsten und dem tiefsten Punkt der kreisringförmigen ebenen Fläche bestehen maximal 0,08 mm Höhenunterschied.

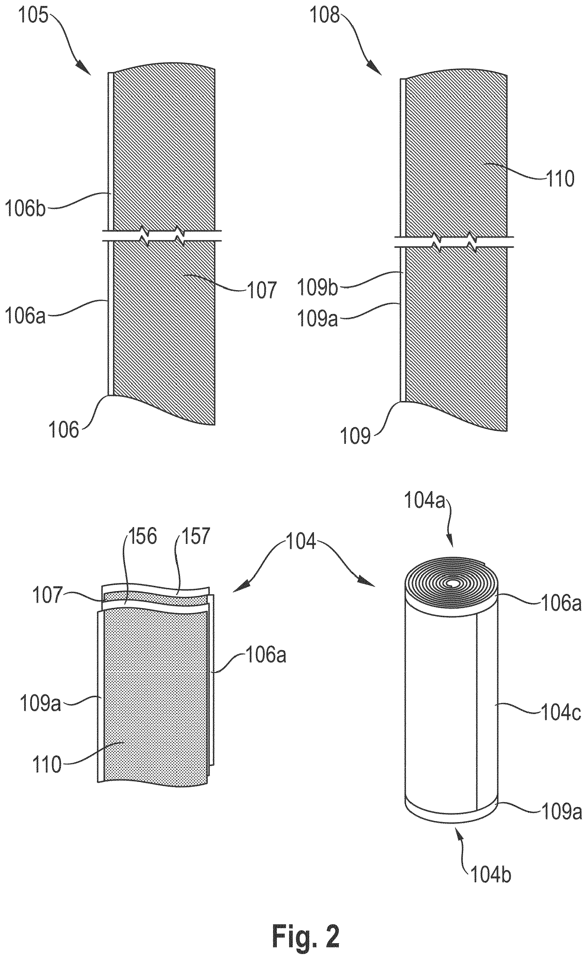

Der Aufbau des Elektroden-Separator-Verbund 104 wird anhand von **Fig. 2** veranschaulicht. Der Verbund 104 umfasst die bandförmige Anode 105 mit dem bandförmigen Anodenstromkollektor 106, der einen ersten Längsrand 106a und einen dazu parallelen zweiten Längsrand aufweist. Bei dem Anodenstromkollektor 106 handelt es sich um eine Folie aus Kupfer oder Nickel. Diese umfasst einen bandförmigen Hauptbereich, der mit einer Schicht aus negativem Elektrodenmaterial 107 beladen ist, sowie einen freien Randstreifen 106b, der sich entlang seines ersten Längsrands 106a erstreckt und der nicht mit dem Elektrodenmaterial 107 beladen ist. Weiterhin umfasst der Verbund 104 die bandförmige Kathode 108 mit dem bandförmigen Kathodenstromkollektor 109, der einen ersten Längsrand 109a und einen dazu parallelen zweiten Längsrand aufweist. Bei dem Kathodenstromkollektor 109 handelt es sich um eine Aluminiumfolie. Er umfasst einen bandförmigen Hauptbereich, der mit einer Schicht aus positivem Elektrodenmaterial 110 beladen ist, sowie einen freien Randstreifen 109b, der sich entlang seines ersten Längsrands 109a erstreckt und der nicht mit dem Elektrodenmaterial 110 beladen ist. Beide Elektroden sind einzeln in ungewickeltem Zustand dargestellt.

Die Anode 105 und die Kathode 108 sind innerhalb des Elektroden-Separator-Verbunds 104 versetzt zueinander angeordnet, so dass der erste Längsrand 106a des Anodenstromkollektors 106 aus der ersten endständigen Stirnseite 104a und der erste Längsrand 109a des Kathodenstromkollektors 109 aus der zweiten endständigen Stirnseite 104b des Elektroden-Separator-Verbunds 104 austritt. Die versetzte Anordnung geht aus der Darstellung links unten hervor. Dort sind auch die zwei bandförmigen Separatoren 156 und 157 dargestellt, die im Wickel die Elektroden 105 und 108 voneinander trennen.

In der Darstellung rechts unten ist der Elektroden-Separator-Verbunds 104 in gewickelter Form dargestellt, wie er in einer Energiespeicherzelle gemäß einer der Figuren 1 bis 4 zum Einsatz kommen kann. Die aus den Stirnseiten 104a und 104b austretenden Elektrodenränder 106a und 109a sind gut zu erkennen. Der Wickelmantel 104c wird durch eine Kunststofffolie gebildet.

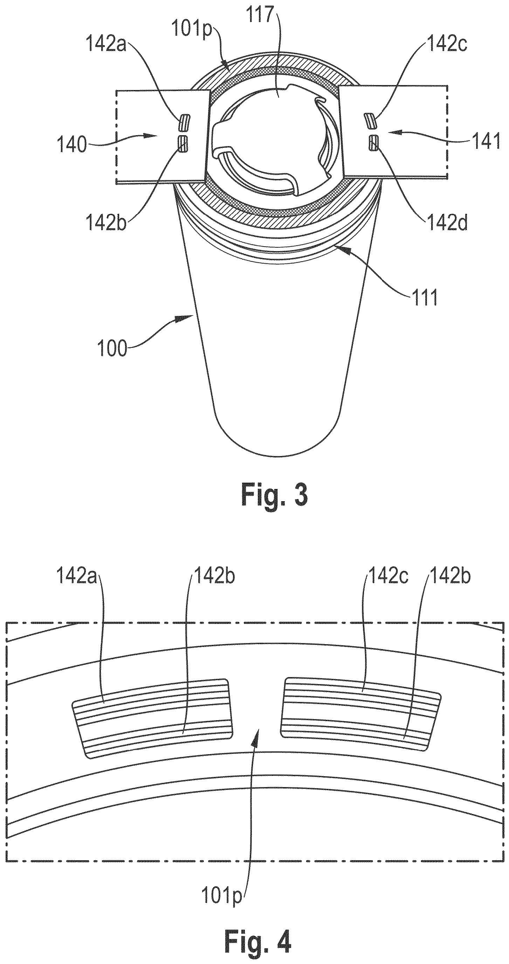

In **Fig. 3** ist eine erfindungsgemäße Energiespeicherzelle 100 gemäß Fig. 1 mit zwei angeschweißten elektrischen Leitern 140 und 141 dargestellt. Die elektrischen Leiter 140 und 141 bestehen jeweils aus einem Metall und sind mit dem radial nach innen umgebogenen Öffnungsrand des Gehäusebechers der Energiespeicherzelle 100 durch Verschweißung verbunden. Beide elektrischen Leiter 140 und 141 sind auf die kreisringförmige ebene Fläche 101p des Öffnungsrands aufgeschweißt. Über die elektrischen Leiter 140 und 141 kann die Energiespeicherzelle 100 mit benachbarten Zellen des gleichen Bautyps verbunden werden.

Zellanalysen haben ergeben, dass die unter der ebene Fläche 101p angeordnete Dichtung durch den Schweißprozess nicht beschädigt wurde.

In **Fig. 4** ist die Unterseite eines nach innen umgebogenen Öffnungsrands eines Gehäusebechers dargestellt, auf dessen Oberseite gemäß der Erfindung ein elektrischer Leiter aufgeschweißt wurde. Es ist zu erkennen, dass hier jeweils zwei Schweißnähte (142a und 142b sowie 142c und 142d) parallel zueinander angeordnet sind. Weiterhin ist zu erkennen, dass die Schweißnähte jeweils aus mehreren parallel zueinander verlaufenden einzelnen Schweißlinien gebildet sind. Solche Schweißlinien lassen sich besonders effizient mittels eines Lasers bilden.

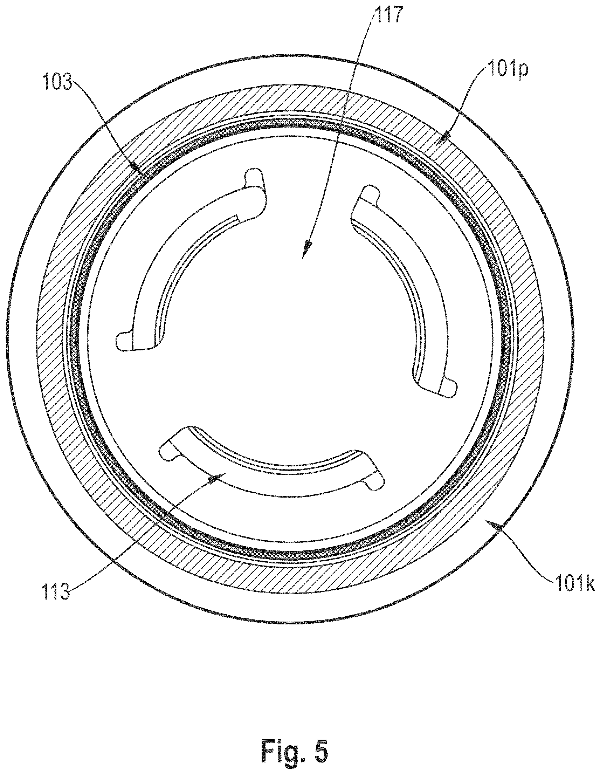

**Fig. 5** zeigt eine Draufsicht auf ein Deckelbauteil einer erfindungsgemäße Energiespeicherzelle gemäß Fig. 1. Zu erkennen sind die kreisringförmige ebene Fläche 101p sowie ein Rand der Dichtung 103 und die Polkappe 117. Im Bereich der kreisringförmigen ebenen Fläche 101p bestehen zwischen dem höchsten und dem tiefsten Punkt der kreisringförmigen ebenen Fläche maximal 0,08 mm Höhenunterschied. Die Fläche 101p erstreckt sich bis zur inneren Kante des nach innen umgebogenen Öffnungsrands, unter der die Dichtung 103 hervorragt. Nach außen hin grenzt die ebene Fläche 101p an den gewölbten Bereich 101kan.

Die in **Fig. 6** dargestellte Deckelbaugruppe 102 umfasst die Polkappe 117, die erste Metallscheibe 113, die zweite Metallscheibe 115, die ringförmige Dichtung 103 und den ringförmigen Isolator 116. Die erste Metallscheibe 113 ist zwischen der Polkappe 117 und der zweiten Metallscheibe 115 angeordnet. Der ringförmige Isolator 116 isoliert die erste Metallscheibe 113 elektrisch gegen die zweite Metallscheibe 115. Die erste Metallscheibe 113 steht hingegen in unmittelbarem Kontakt zur Polkappe 117.

Die ringförmige Dichtung 103 ist auf den kreisförmigen Rand der ersten Metallscheibe 113 aufgezogen, der U-förmig um den Rand der Polkappe 117 umgeschlagen ist.

Die Dichtung 103 umfasst ein äußeres Ringsegment 130 welches an seinem unteren Ende in einem nach innen weisenden Kragen 131 mündet, der das äußere Ringsegment 130 an diesem Ende verengt. Der Kragen 131 weist einen inneren Rand 131a auf, der in das innere Ringsegment 132 übergeht, das einen kleineren Durchmesser als das äußere Ringsegment 130 aufweist. Das äußere Ringsegment 130 weist eine nach innen weisende, umlaufende, mit einem Hinterschnitt 132 versehene Nase 133 auf.

Der U-förmig um den Rand der Polkappe 117 umgeschlagene Rand der ersten Metallscheibe 113 sitzt auf dem Kragen 131 auf und wird von der Nase 133 in seinem Sitz gehalten.

Das Schnittfoto gemäß **Fig. 7** zeigt den Verschlussabschnitt einer Deckelbaugruppe gemäß Fig. 6 in montiertem Zustand. Der Rand des Gehäusebechers 101 ist nach innen umgebogen und fixiert die Deckelbaugruppe mit der Polkappe 117, der ersten Metallscheibe 113 und der zweiten Metallscheibe 115 sowie dem ringförmigen Isolator 116. Die Dichtung 103 liegt in dem Verschlussabschnitt komprimiert vor. Sie wird bevorzugt von unten und von oben sowie auch radial gegen den kreisförmigen, U-förmig umgeschlagenen Rand der ersten Metallscheibe 113 gepresst. Gut zu erkennen sind auch der Kragen 131 und das innere Ringsegment 132. Das Ringsegment 132 ist weit nach unten gezogen und schirmt die Einbuchtung 111 nach innen ab. Zu erkennen ist auch hier die von dem Hinterschnitt 132 gebildete Vertiefung, die teilweise durch die in Folge der Kompression und hier gut sichtbaren Biegung der Dichtung deformierte Nase 133 ausgefüllt ist.

## Patentansprüche

1. Ringförmige Dichtung (103) für die Deckelbaugruppe (102) einer Energiespeicherzelle (100) mit den folgenden Merkmalen:
a. Sie umfasst ein äußeres Ringsegment (130);
b. Das äußere Ringsegment (130) mündet an einem seiner zwei Enden in einem nach innen weisenden Kragen (131), der das äußere Ringsegment (130) an diesem Ende verengt; und
c. der Kragen (131) weist einen inneren Rand (131a) auf, der in ein inneres Ringsegment (132) übergeht;
wobei
d. das äußere Ringsegment (130) eine nach innen weisende, umlaufende, mit einem Hinterschnitt (132) versehene Nase (133) aufweist.

2. Ringförmige Dichtung nach Anspruch 1, mit mindestens einem der folgenden zusätzlichen Merkmale:
a. Das äußere Ringsegment (130) ist hohlzylindrisch ausgebildet.
b. Das innere Ringsegment (132) ist hohlzylindrisch oder sich konisch verjüngend ausgebildet.
c. Der Hinterschnitt (132) ist als ringförmige, nutartige Vertiefung ausgebildet.
d. Die Nase (133) ist als ringförmige Erhöhung auf der Innenseite des äußeren Ringsegments (130) ausgebildet.
e. Die mit dem Hinterschnitt (132) versehene Nase (133) unterteilt das äußere Ringsegment (130) in ein zentrales Teilsegment (130a) und ein endständiges Teilsegment (130b).
f. Der Kragen (131) weist auf seiner Innenseite eine ringförmige Erhebung (134) auf.

3. Deckelbaugruppe (102) für eine Energiespeicherzelle (100) mit den folgenden Merkmalen:
a. Sie umfasst eine Polkappe (117) mit einem kreisförmigen Rand;
b. sie umfasst eine erste Metallscheibe (113) mit einem kreisförmigen Rand;
c. sie umfasst eine zweite Metallscheibe (115) mit einem kreisförmigen Rand;
d. sie umfasst ringförmige Dichtung (103); und
e. sie umfasst einen ringförmigen Isolator (116);
wobei
f. die erste Metallscheibe (113) zwischen der Polkappe (117) und der zweiten Metallscheibe (115) angeordnet ist;
g. der ringförmige Isolator (116) die erste Metallscheibe (113) und die zweite Metallscheibe (115) elektrisch gegeneinander isoliert;
h. die erste Metallscheibe (113) in unmittelbarem Kontakt zur Polkappe (117) steht; und
i. die ringförmige Dichtung (103) auf den kreisförmigen Rand der Polkappe (117) und/oder der ersten Metallscheibe (113) aufgezogen ist;
**dadurch gekennzeichnet, dass**
j. die Dichtung gemäß einem der Ansprüche 1 oder 2 ausgebildet ist,
k. der Rand der Polkappe (117) und/oder der ersten Metallscheibe (113) auf dem Kragen (131) aufsitzt und
l. von der Nase (133) in seinem Sitz gehalten wird.

4. Deckelbaugruppe (102) nach Anspruch 3 mit einem der folgenden zusätzlichen Merkmale:
a. Die ringförmige Dichtung (103) ist auf den kreisförmigen Rand der ersten Metallscheibe (113) aufgezogen.
b. Die ringförmige Dichtung (103) ist auf den Rand der Polkappe (117) aufgezogen.
c. Die ringförmige Dichtung (103) ist auf den kreisförmigen Rand der Polkappe (117) und den kreisförmigen Rand der ersten Metallscheibe (113) aufgezogen.
d. Der kreisförmige Rand der ersten Metallscheibe (113) ist U-förmig um den Rand der Polkappe (117) umgeschlagen.

5. Energiespeicherzelle (100) mit den folgenden Merkmalen:
a. Die Energiespeicherzelle umfasst einen Elektroden-Separator-Verbund (104) mit der Sequenz Anode (105) / Separator (116)/ Kathode (108),
b. der Elektroden-Separator-Verbund (104) liegt in Form eines zylindrischen Wickels mit einer ersten endständigen Stirnseite (104a) und einer zweiten endständigen Stirnseite (104b) und einem dazwischen liegenden Wickelmantel (104c) vor,
c. die Energiespeicherzelle umfasst ein luft- und flüssigkeitsdicht verschlossenes Gehäuse, das einen metallischen Gehäusebecher (101) mit einer endständigen kreisförmigen Öffnung und eine Deckelbaugruppe (102) mit einem kreisförmigen Rand (102a), welche die kreisförmige Öffnung verschließt, umfasst,
d. die Deckelbaugruppe (102) ist gemäß einem der Ansprüche 1 oder 2 ausgebildet,
e. der Gehäusebecher (101) umfasst in axialer Abfolge einen Boden (101a), einen Zentralabschnitt (101b) und einen Verschlussabschnitt (101c), wobei
- der Zentralabschnitt (101b) zylindrisch ausgebildet ist und in dem Zentralabschnitt (101b) der Wickelmantel (104c) des als Wickel ausgebildeten Elektroden-Separator-Verbunds (104) mit der Innenseite des Gehäusebechers (101) in Kontakt steht, und
- in dem Verschlussabschnitt (101c) die ringförmige Dichtung (103) der Deckelbaugruppe in einem Presskontakt mit dem Rand der Polkappe (117) und/oder dem Rand der ersten Metallscheibe (113) und der Innenseite des Gehäusebechers (101) steht, und
f. der Gehäusebecher (101) weist in dem Verschlussabschnitt (101c) einen die kreisförmige Öffnung definierenden Öffnungsrand (101d) auf, der radial nach innen über den von der Dichtung (103) umschlossenen Rand der Polkappe (117) und/oder der ersten Metallscheibe (113)umgebogen ist und der die Deckelbaugruppe (102) einschließlich der Dichtung (103) in der kreisförmigen Öffnung des Gehäusebechers (101) formschlüssig fixiert.

6. Energiespeicherzelle (100) nach Anspruch 5, mit dem folgenden zusätzlichen Merkmal:
a. Der radial nach innen umgebogene Öffnungsrand (101d) des Gehäusebechers (101) weist eine höhere Wandstärke auf als der Gehäusebecher (101) in dem Zentralabschnitt (101b).

7. Energiespeicherzelle nach einem der vorhergehenden Ansprüche mit mindestens einem der folgenden zusätzlichen Merkmale:
a. Der Zentralabschnitt (101b) und der Verschlussabschnitt (101c) werden durch eine Einbuchtung (111), welche die Außenseite des Gehäusebechers (101) ringförmig umläuft, getrennt.
b. Der Gehäusebecher (101) weist in dem Zentralabschnitt (101b) und dem Verschlussabschnitt (101c) einen identischen maximalen Außendurchmesser auf.
c. Im Bereich der Einbuchtung (111) ist der Außendurchmesser des Gehäusebechers (101) um das 4- bis 12-fache der Wandstärke des Gehäusebechers (101) in diesem Bereich reduziert.

8. Energiespeicherzelle nach einem der vorhergehenden Ansprüche mit mindestens einem der folgenden zusätzlichen Merkmale:
a. Die Anode (105) des Elektroden-Separator-Verbunds (104) umfasst einen Anodenstromkollektor (106), der einen ersten Längsrand (106a) und einen dazu parallelen zweiten Längsrand aufweist.
b. Der Anodenstromkollektor (106) umfasst einen Hauptbereich, der mit einer Schicht (107) aus negativem Elektrodenmaterial beladen ist, sowie einen freien Randstreifen, der sich entlang seines ersten Längsrands (106a) erstreckt und der nicht mit dem negativen Elektrodenmaterial beladen ist.
c. Die Kathode (108) des Elektroden-Separator-Verbunds (104) umfasst einen Kathodenstromkollektor (109), der einen ersten Längsrand (109a) und einen dazu parallelen zweiten Längsrand aufweist.
d. Der Kathodenstromkollektor (109) umfasst einen Hauptbereich, der mit einer Schicht aus positivem Elektrodenmaterial (110) beladen ist, sowie einen freien Randstreifen, der sich entlang seines ersten Längsrands (109a) erstreckt und der nicht mit dem Elektrodenmaterial (110) beladen ist.
e. Die Anode (105) und die Kathode (108) sind innerhalb des Elektroden-Separator-Verbunds (104) derart angeordnet, dass der erste Längsrand (106a) des Anodenstromkollektors (106) aus der ersten endständigen Stirnseite (104a) und der erste Längsrand (109a) des Kathodenstromkollektors (108) aus der zweiten endständigen Stirnseite (104b) des Elektroden-Separator-Verbunds (104) austritt.

9. Energiespeicherzelle nach Anspruch 8 mit mindestens einem der folgenden zusätzlichen Merkmale:
a. Die Energiespeicherzelle umfasst ein Kontaktblech (112), das auf dem ersten Längsrand des Anodenstromkollektors aufsitzt und die erste endständige Stirnseite abdeckt oder auf dem ersten Längsrand (109a) des Kathodenstromkollektors (109) aufsitzt und die zweite endständige Stirnseite (104b) abdeckt und mit diesem durch Verschweißung verbunden ist.
b. Das Kontaktblech (112) ist mit dem ersten Längsrand des Anodenstromkollektors oder dem ersten Längsrand (109a) des Kathodenstromkollektors (109) durch Verschweißung verbunden.
c. Das Kontaktblech (112) ist mit dem Boden des Gehäusebechers, insbesondere durch Verschweißung, verbunden.
d. Das Kontaktblech (112) ist mit der Deckelbaugruppe elektrisch verbunden.

10. Energiespeicherzelle nach Anspruch 8 oder nach Anspruch 9 mit mindestens einem der folgenden zusätzlichen Merkmale:
a. Der ersten Längsrand (106a) des Anodenstromkollektors (106) oder der erste Längsrand des Kathodenstromkollektors sitzt unmittelbar auf dem Boden (101a) des Gehäusebechers (101) auf und ist mit diesem durch Verschweißung verbunden.

11. Energiespeicherzelle nach einem der vorhergehenden Ansprüche mit mindestens einem der folgenden zusätzlichen Merkmale:
a. Die Scheibe (113) der Deckelbaugruppe (102) umfasst eine metallische Membran (114), die sich bei einem Überdruck innerhalb des Gehäuses nach außen wölbt oder birst.
b. Die Scheibe (113) mit der Membran (114) steht in elektrischem Kontakt mit einem elektrischen Leiter (118), der elektrisch an den Anodenstromkollektor oder an den Kathodenstromkollektor (109) angekoppelt ist.

12. Dichtung oder Deckelbaugruppe oder Energiespeicherzelle nach einem der vorhergehenden Ansprüche mit mindestens einem der folgenden zusätzlichen Merkmale:
a. Die Dichtung (103) besteht aus einem Kunststoffmaterial, das einen Schmelzpunkt > 200 °C, bevorzugt > 300 °C, aufweist.
b. Bei dem Kunststoffmaterial handelt es sich um ein Polyetheretherketon (PEEK), ein Polyimid (PI), ein Polyphenylensulfid (PPS) oder ein Polytetrafluorethylen (PTFE).

13. Verbund aus Energiespeicherzellen mit den Merkmalen
a. Der Verbund umfasst mindestens zwei Energiespeicherzellen (100) gemäß einem der Ansprüche 5 bis 12 und
b. der Verbund umfasst einen elektrischen Leiter aus einem Metall, der mit den radial nach innen umgebogenen Öffnungsrändern der Gehäusebecher der mindestens zwei Energiespeicherzellen durch Verschweißung verbunden ist.
